(19) **Europäisches Patentamt / European Patent Office / Office européen des brevets**

(11) **EP 3 063 937 B1**

(12) **EUROPEAN PATENT SPECIFICATION**

(45) Date of publication and mention
of the grant of the patent:
**13.02.2019 Bulletin 2019/07**

(21) Application number: **14796956.2**

(22) Date of filing: **27.10.2014**

(51) Int Cl.:
***H04N 9/64*** (2006.01)

(86) International application number:
**PCT/US2014/062430**

(87) International publication number:
**WO 2015/065911 (07.05.2015 Gazette 2015/18)**

(54) **CHROMA DOWN-CONVERSION AND UP-CONVERSION PROCESSING**

VERARBEITUNG EINER CHROMA-ABWÄRTS- UND AUFWÄRTSUMWANDLUNG

TRAITEMENT DE CONVERSION DE CHROMINANCE VERS LE BAS ET VERS LE HAUT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2013 US 201314070285**

(43) Date of publication of application:
**07.09.2016 Bulletin 2016/36**

(73) Proprietor: **Microsoft Technology Licensing, LLC Redmond, WA 98052 (US)**

(72) Inventors:
• **ZHU, Lihua**
  **Redmond, Washington 98052-6399 (US)**
• **SANKURATRI, Sridhar**
  **Redmond, Washington 98052-6399 (US)**
• **KUMAR, B. Anil**
  **Redmond, Washington 98052-6399 (US)**
• **ABDO, Nadim**
  **Redmond, Washington 98052-6399 (US)**

(74) Representative: **Grünecker Patent- und Rechtsanwälte PartG mbB Leopoldstraße 4 80802 München (DE)**

(56) References cited:
**EP-A1- 0 510 933**

• **G. Chan: "Toward Better Chroma Subsampling", SMPTE Motion Imaging Journal No. 39, 30 June 2008 (2008-06-30), XP055162554, Retrieved from the Internet: URL:http://sas-origin.onstreammedia.com/or igin/smpte0109/New Folder 1/Chan.pdf [retrieved on 2015-01-15]**
• **C. Walker: "Chroma Resampler", Xilinx Application Note, 28 July 2010 (2010-07-28), XP055162195, Retrieved from the Internet: URL:http://www.xilinx.com/support/document ation/application_notes/xapp932.pdf [retrieved on 2015-01-14]**

## Description

### BACKGROUND

Screen content, or data describing information displayed to a user by a computing system on a display, generally includes a number of different types of content. These can include, for example, text content, video content, static images (e.g., displays of windows or other GUI elements), and slides or other presentation materials. Increasingly, screen content is delivered remotely, for example so that two or more remote computing systems can share a common display, allowing two remotely-located individuals to view the same screen simultaneously, or otherwise in a teleconference such that a screen is shared among multiple individuals.

Generally, screen content captured in a studio, from a camera, or based on other image- or text-based screen images (e.g., a display window) are captured in RGB format. The specific RGB format may vary in terms of the number of bits used for each color channel, such as R8B8G8 (8 bits for each of the R, G, and B color channels), or R16G16B16 (16 bits for each channel). If this data is then converted to a corresponding luminance-chrominance arrangement (i.e., a YUV format), a corresponding format would be YUV444, which requires a total of six bytes of information per pixel.

Because screen content is delivered remotely, and due to increasing screen resolutions, it is desirable to compress this content to a size below its native bitmap size, to conserve bandwidth and improve efficiency in transmission. Accordingly, many devices that are configured to send and/or receive video or screen data are capable of only accepting lower-objective quality data but with visually less loss subjective quality, such as YUV422 data, which requires four bytes to describe two pixels, or YUV411 data, which requires six bytes to describe four pixels, or even YUV420 data which are commonly used because it can bring visually lossless quality for the video content, which also requires six bytes to describe four pixels, but which are reordered to group the Y, U, and V values. Such devices are only capable of managing such smaller data sizes for processing and compression (e.g., using a Moving Picture Experts Group (MPEG) codec, such as H.264 or HEVC-based codec). However, conversion from YUV444 to one of these other formats is typically performed by dropping some of the data describing each pixel (i.e., downsampling), which results in a loss of some color information.

Increasingly because screen content is transmitted for viewing on a remote system, loss of data from YUV444 to YUV420 or some other lower-quality format typically used only for video transmission is required; however, because the screen content includes not just video content but static image and text content as well, use of the lower-quality format is undesirable. However, when a device receives such encoded screen content and decodes/decompresses that content, it does so in the lower-quality format in which the screen content was received (e.g., YUV420, etc.). In some cases, the decoded content is then up-converted to YUV444. This results in a number of issues. For example, such up-conversion is typically performed using a nearest pixel method or a bilinear method to accomplish up-conversion. Use of these techniques leads to creation of artifacts in the screen content after it is up-converted to the YUV444 format. For example, text may disappear if it is of a particular color, or other artifacts may appear (e.g., lines or shadows in the resulting image). Such artifacts lead to lack of clarity in the screen content, even when up-converted.

### SUMMARY

It is the object of the present invention to provide a method, system and computer-readable medium for processing chrominance of screen content.

The object is achieved by the subject-matter of the independent claims.

Embodiments are defined by the dependent claims.

In summary, the present disclosure relates to chrominance down-conversion techniques useable to minimize visual artifacts that would otherwise occur when converting image data in a high quality format (e.g., YUV444) to a lower quality format for encoding and transmission to a remote system. In some aspects, the present disclosure applies up-conversion techniques that complement those down-conversion techniques to ensure that high-quality images data is reconstituted at the remote system.

In a first aspect, a method processing chrominance of screen content is disclosed. The method includes down-converting chrominance of screen content at a computing device from a first format to a second format, the second format compatible with a video codec. The method also includes compressing the down-converted screen content in the second format using the video codec to generate compressed down-converted screen content. The method further includes transmitting the compressed down-converted screen content to a second computing device.

In a second aspect, a screen content conversion system includes a down-conversion component operable on a computing device to receive screen content and down-convert chrominance of the screen content from a first format to a second format, the second format being compatible with a video codec, wherein the down-conversion component applies at least one of a nine-tap filter, a bilateral filter, or a discrete cosine transform to the screen content to generate down-converted screen content. The screen content conversion system further includes a compression component operable on the computing device to receive the down-converted screen content and generate compressed down-converted screen content by applying the video codec. The screen content conversion system also includes a transmission component operable to transmit the compressed down-converted screen content to a remote computing device.

In a third aspect, a computer-readable medium is disclosed that includes computer-executable instructions which, when executed, cause a computing system to perform a method of processing chrominance of screen content. The method includes down-converting chrominance of screen content at a computing device from a first format to a second format, the second format compatible with a video codec, wherein the down-conversion includes applying at least one of a nine-tap filter, a bilateral filter, or a discrete cosine transform to the screen content to generate down-converted screen content. The method further includes compressing the down-converted screen content in the second format using the video codec to generate compressed down-converted screen content. The method also includes transmitting the compressed down-converted screen content to a second computing device.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

BRIEF DESCRIPTION OF THE DRAWINGS

Fig. 1 illustrates an example schematic arrangement of a system in which graphical data received at a computing system from a remote source is processed;

Fig. 2 is a flowchart of a method of down-converting and up-converting chrominance for use in connection with compression of screen data using a video codec;

Fig. 3A is a process flow for a method of down-converting and up-converting chrominance using a nine tap filter, according to an example embodiment:

Fig. 3B is a process flow for a method of down-converting and up-converting chrominance using hue, saturation, and lightness conversion and a bilateral filter, according to an example embodiment;

Fig. 3C is a process flow for a method of down-converting and up-converting chrominance using a discrete cosine transform and a complementary inverse discrete cosine transform, according to an example embodiment;

Fig. 4 is an example illustration of a nine tap filter useable in accordance with the embodiment of Fig. 3A;

Fig. 5 is an example weighting of a nine tap filter useable in connection with the filter layout of Fig. 4;

Fig. 6 is a block diagram illustrating down-conversion of chrominance using hue, saturation, and lightness conversion and a bilateral filter, as illustrated in Fig. 3B, according to an example embodiment;

Fig. 7 is a schematic illustration of a discrete cosine transform performed on screen content, according to an example embodiment;

Fig. 8 is a schematic illustration of an inverse discrete cosine transform performed on down-converted screen content, according to an example embodiment;

Fig. 9 is a block diagram illustrating example physical components of a computing device with which embodiments of the invention may be practiced;

Figs. 10A and 10B are simplified block diagrams of a mobile computing device with which embodiments of the present invention may be practiced; and

Fig. 11 is a simplified block diagram of a distributed computing system in which embodiments of the present invention may be practiced.

DETAILED DESCRIPTION

As briefly described above, embodiments of the present invention are directed to chrominance up-conversion and down-conversion processing. In particular, the present disclosure relates generally to methods and systems for processing screen content, such as screen frames, which include a plurality of different types of screen content. Such screen content can include text, video, image, special effects, or other types of content The chrominance up-conversion and down-conversion processes described herein maintain high quality color and image fidelity, while converting such screen content to a compressed format for transmission using video-encoding and transmission protocols.

To address some limitations in remote screen display systems, the Remote Desktop Protocol (RDP) was developed by MICROSOFT® Corporation of Redmond, Washington. In this protocol, a screen frame is analyzed, with different contents classified differently. When RDP is used, a mixed collection of codecs can be applied, based on the type of screen content that is to be compressed and transmitted to a remote system for subsequent reconstruction and display.

In recent iterations of RDP solutions, video codecs, such as MPEG-based codecs (e.g., HEVC or H.264/MPEG-4 AVC), have been used for compressing and distributing screen content. Such video codecs typically require use of compact representations of images using a small number of bits to describe pixel data (or at least a smaller number than are used for full-fidelity image data). As noted above, simple down-sampling of pixel data can lose critical information, causing visual artifacts in the resulting encoded, transmitted, and decoded screen content.

In some embodiments, and in contrast to existing RDP solutions, the chrominance down-conversion and up-conversion processes discussed herein format screen content for use in connection with a video codec, which typically receives a lower-quality format, such as the YUV420 format. By applying one or more of the techniques discussed herein, such as use of a nine tap filter, use of hue, saturation, and lightness (HSL) formatting and a bilateral filter, or use of a discrete cosine transform (and attendant inverse discrete cosine transform for up-conversion), visual artifacts are avoided that would otherwise occur by simply downsampling of chrominance components of higher-quality formats, such as YUV444.

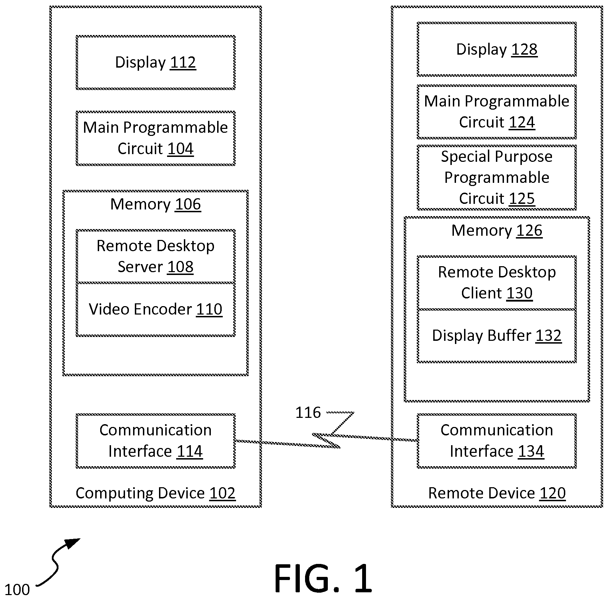

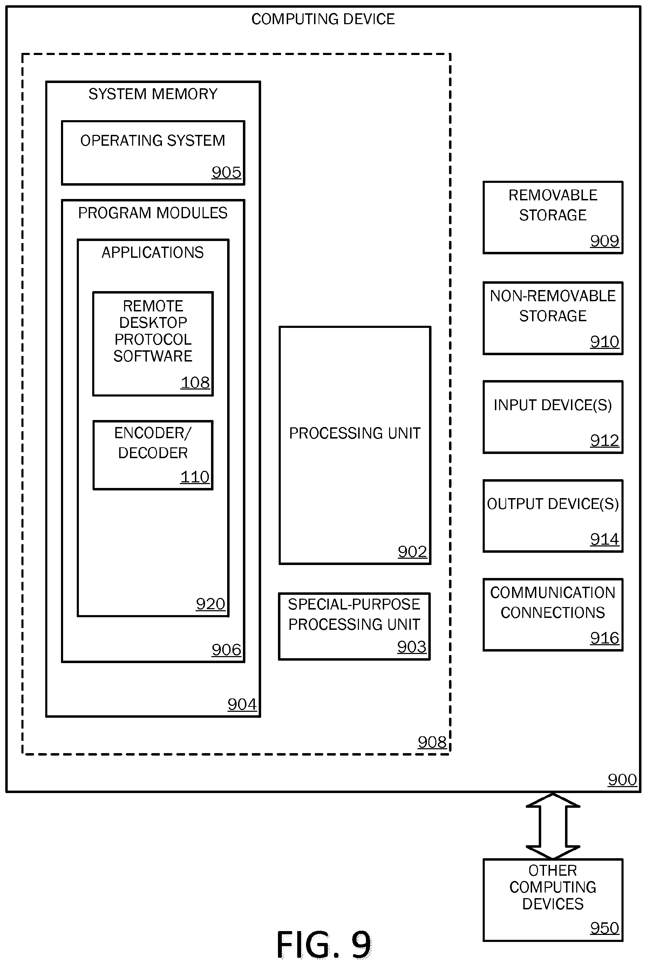

Fig. 1 illustrates an example schematic arrangement of a system 100 in which remote screen content distribution can be performed, and in which a universal codec can be implemented. As illustrated, the system 100 includes a computing device 102, which includes a programmable circuit 104, such as a CPU. The computing device 102 further includes a memory 106 configured to store computing instructions that are executable by the programmable circuit 104. Example types of computing systems suitable for use as computing device 102 are discussed below in connection with Figs. 9-11.

Generally, the memory 106 includes a remote desktop protocol software 108 and an encoder 110. The remote desktop protocol software 108 generally is configured to replicate screen content presented on a local display 112 of the computing device 102 on a remote computing device, illustrated as remote device 120. In some embodiments, the remote desktop protocol software 108 generates content compatible with a Remote Desktop Protocol (RDP) defined by MICROSOFT® Corporation of Redmond, Washington.

As is discussed in further detail below, the encoder 110 can be configured to apply a universal content codec to content of a number of content types (e.g., text, video, images) such that the content is compressed for transmission to the remote device 120. In example embodiments, the encoder 110 can generate a bitstream that is compliant with a standards-based codec, such as an MPEG-based codec. In particular examples, the encoder 110 can be compliant with one or more codecs such as an MPEG-4 AVC/H.264 or HEVC/H.265 codec. Other types of standards-based encoding schemes or codecs could be used as well.

As illustrated in Fig. 1, encoded screen content can be transmitted to a remote device 120 by a communication interface 114 of the computing device 102, which provides the encoded screen content to a communication interface 134 of the remote device 120 via a communicative connection 116 (e.g., the Internet). Generally, and as discussed below, the communicative connection 116 may have unpredictable available bandwidth, for example due to additional traffic occurring on networks forming the communicative connection 116. Accordingly, different qualities of data may be transmitted via the communicative connection 116.

In the context of the present disclosure, in some embodiments, a remote device 120 includes a main programmable circuit 124, such as a CPU, and a special-purpose programmable circuit 125. In example embodiments, the special-purpose programmable circuit 125 is a standards-based decoder, such as an MPEG decoder designed to encode or decode content having a particular standard (e.g., MPEG-4 AVC/H.264, or HEVC/H.265). In particular embodiments, the remote device 120 corresponds to a client device either local to or remote from the computing device 102, and which acts as a client device useable to receive screen content. Accordingly, from the perspective of the remote device 120, the computing device 102 corresponds to a remote source of graphical (e.g., display) content.

In addition, the remote device 120 includes a memory 126 and a display 128. The memory 126 includes a remote desktop client 130 and display buffer 132. The remote desktop client 130 can be, for example, a software component configured to receive and decode screen content received from the computing device 102. In some embodiments, the remote desktop client 130 is configured to receive and process screen content for presenting a remote screen on the display 128. The screen content may be, in some embodiments, transmitted according to the Remote Desktop Protocol defined by MICROSOFT® Corporation of Redmond, Washington. The display buffer 132 stores in memory a current copy of screen content to be displayed on the display 128, for example as a bitmap in which regions can be selected and replaced when updates are available.

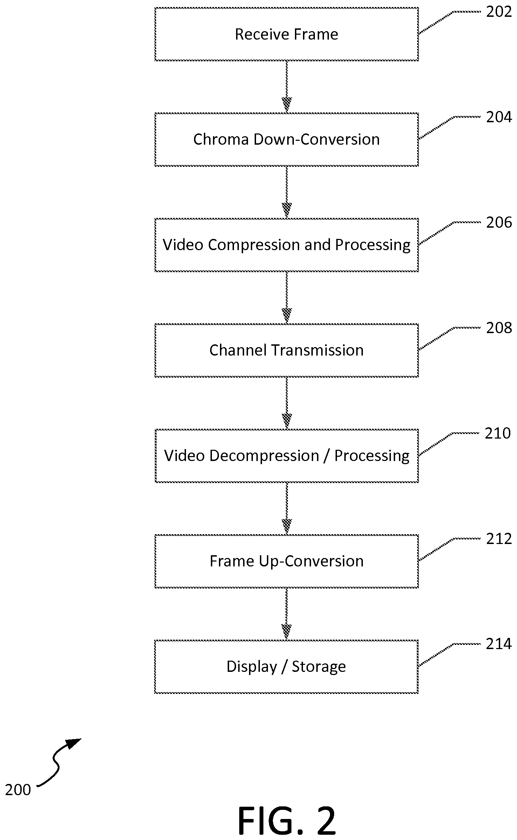

Referring to Fig. 2, a flowchart of a method 200 of down-converting and up-converting chrominance for use in connection with compression of screen data using a video codec is disclosed. The method 200 can be performed, for example using the system 100 of Fig. 1, above, or in any other arrangement of computing systems, such as those discussed below in connection with Figs. 9-11.

In the embodiment shown, the method 200 includes a frame receipt operation 202, which corresponds to receipt of screen content representing one or more frames at a conversion component. For example, the frame receipt operation 202 can correspond to receiving screen content at a conversion component of a computing system from another software subsystem of that same computing system; in alternative embodiments, the frame receipt operation 202 can correspond to receiving screen content from a separate computing system or device as compared to the system performing one or more of the operations of method 200.

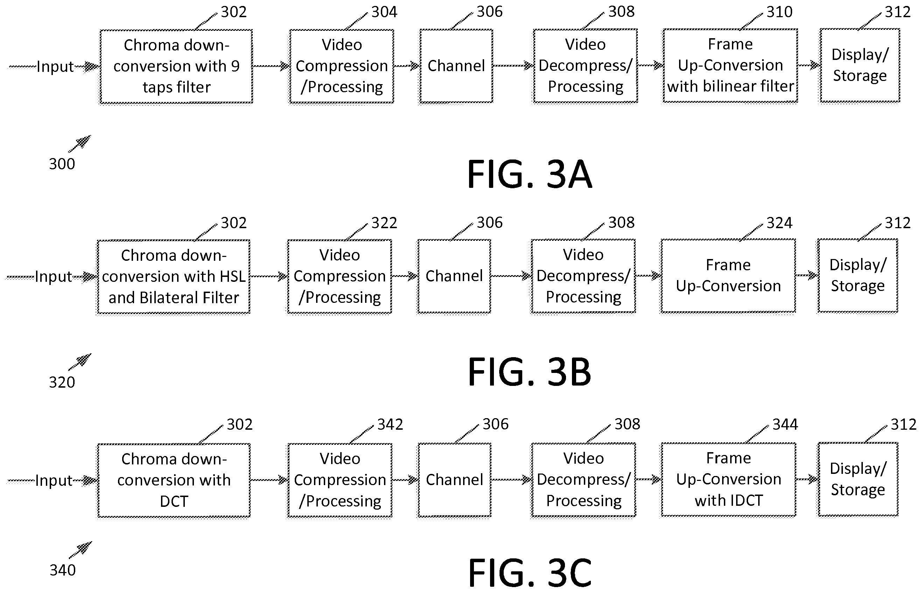

A chrominance down-conversion operation 204 performs a down-conversion process on each of the pixels of screen content, thereby converting the screen content from a first format to a second format that is acceptable to video encoding codecs. In example embodiments, the first format can be a YUV444 format and the second format can be a YUV420 or YUV422 format. In alternative embodiments, other color representations (e.g., coordinate systems) and/or formats could be used as well. Furthermore, a variety of down-conversion methodologies could be used. As explained in further detail below in connection with Figs. 3A-3B, in various embodiments, a nine tap filter could be used; alternatively, or in addition, a bilateral filter could be used, for example on screen content converted to a hue, saturation, and lightness (HSL) coordinate system. Further, and as discussed in connection with Fig. 3C, a discrete cosine transform could be used for chrominance down conversion.

A compression operation 206 performs a compression operation on the down-converted screen content from the chrominance down-conversion operation 204. The compression operation can be, for example, application of a video codec to the down-converted screen content, which is in a format that is accepted by that video codec. In example embodiments, the compression operation 206 can correspond to applying an MPEG-4 AVC/H.264, HEVC/H.265, or other MPEG-based encoding scheme.

In the embodiment shown, a channel transmission operation 208 corresponds to transmitting the now encoded, or compressed, down-converted screen content from the computing system on which it is down-converted and/or compressed to a second computing system. This can correspond, for example, to transmission of encoded screen content from a computing device 102 to a remote device 120 as discussed above in connection with Fig. 1. This can be accomplished via a streamed content arrangement, for example using RDP software as discussed above. Other transmission arrangements, such as transmission of the entirety of an encoded video file, would be possible as well.

In the embodiment shown, a decompression operation 210 decompresses the transmitted, compressed (and down-converted) screen content, using a complementary codec application as in compression operation 206. As noted above, the decompression operation 210 can utilize an MPEG-4 AVC/H.264, HEVC/H.265, or other MPEG-based encoding/decoding scheme. The decompression operation 210 reconstructs the down-converted screen content, e.g., the screen content in YUV420 format, YUV422, or other codec-compatible color representation.

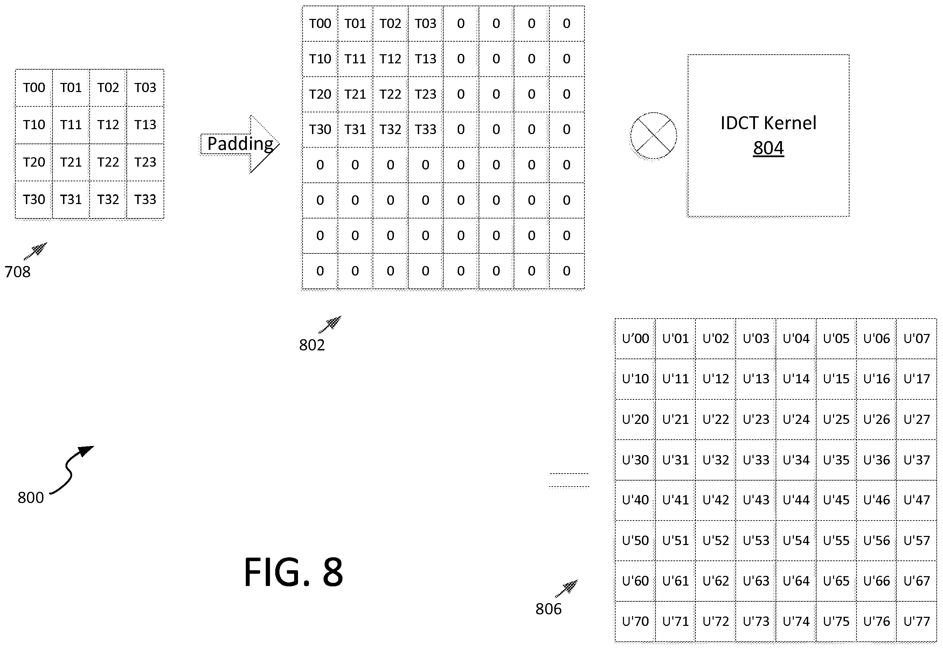

Following the decompression operation 210, an up-conversion operation 212 generates an up-converted version of the screen content based on the down-converted screen content. The up-conversion process can be performed in many ways. For example, the up-conversion operation 212 can include applying a bilinear filter or bi-cubic filter during up-conversion from YUV420 or YUV422 to YUV444. Such an arrangement may be advantageous, for example when used in connection with the nine tap down-conversion process discussed above. In an alternative embodiment, the up-conversion operation 212 can simply be performed using the nearest point without use of any filter. In still further embodiments, the up-conversion operation 212 can include performance of an inverse discrete cosine transform; an example of such an inverse discrete cosine transform is illustrated in Fig. 8, and discussed below.

A storage and display operation 214 receives up-converted screen content and can perform one or more operations using that up-converted screen content. In example embodiments, the storage and display operation 214 can display on a screen of a remote system, such as remote device 120, the screen content that has been up-converted to the original, first format (e.g., YUV444). In alternative embodiments, the received content can be stored at the remote system, such as remote device 120 in memory for later display or transmission.

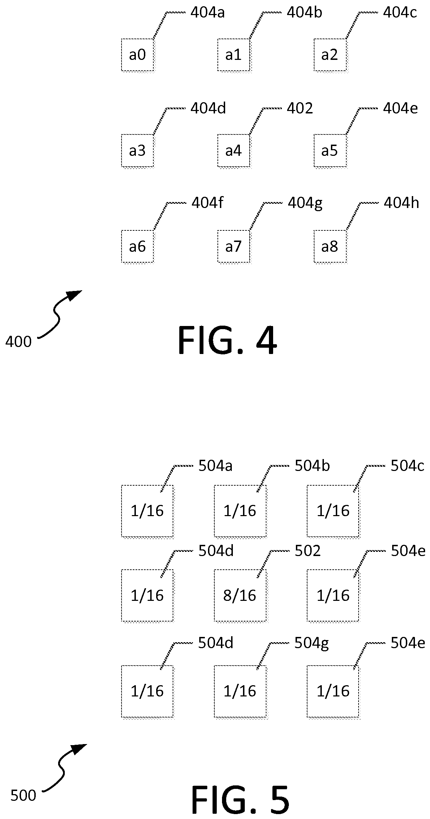

Referring now to Figs. 3A-3C, three specific examples of possible down-conversion and up-conversion processes are disclosed, which can be used in conjunction with compressing and transmitting screen content for delivery to remote system. Fig. 3A is a process flow for a method 300 of down-converting and up-converting chrominance using a nine tap filter, according to an example embodiment. In method 300 of Fig. 3A, received input screen content is down-converted using a nine tap filter at a down-conversion module 302 from a first format to a second format. This conversion can be performed using a nine-tap filter as is discussed below in connection with Figs. 4-5, to perform the down-conversion. As noted previously, the first format is generally not accepted as input for a video codec, while the second format is generally a more compact format and is accepted as input for a video codec. For example, the first format can be an RGB or the YUV444 format, while the second codec can be a YUV420 or YUV422 format. In particular, the down-conversion module 302 can be configured to down-convert the U and V channel of YUV444 format data to generate the down-converted screen content.

The down-converted screen content is then passed to an encoding module 304, which encodes the down-converted screen content using a video codec. As noted above, any of a variety of different codecs could be used, such as a MPEG-based codec (e.g., AVC/H.264, HEVC/H.265). The encoded content is then passed to a transmission channel 306, which corresponds to transmission of the encoded screen content (e.g., from a computing device 102 to a remote device 120). At a receiving computing system (such as remote device 120), a video decompression operation 308 decompresses the received, encoded content, thereby reconstructing uncompressed screen content in the second format that is compatible with the codec selected for video compression/decompression (e.g., YUV420 or YUV422). This down-converted screen content is transferred to an up-conversion module 310 that performs an up-conversion of that screen content. In particular, a bilinear filter can be applied to generate the screen content (e.g., a frame) in an up-converted format (e.g., YUV444, or equivalent RGB format). A display or storage module 312 provides the screen content to either memory for storage or to a screen for display.

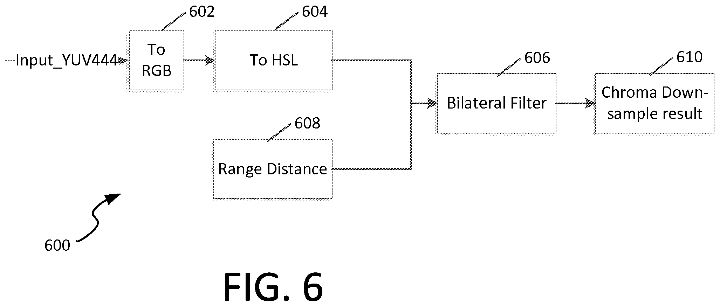

Referring to Fig. 3B, a process flow for a method 320 of down-converting and up-converting chrominance using hue, saturation, and lightness conversion and a bilateral filter is shown, according to an example embodiment. In general, method 320 corresponds to method 300 as described above. However, rather than down-conversion module 302 and up-conversion module 310, method 320 includes a different down-conversion module 322 and up-conversion module 324. In this arrangement, down-conversion module 322 applies chrominance down-conversion using a hue, saturation, and lightness (HSL) representation of screen data, and applies bilateral filter to that representation. In particular, one example of the HSL representation and bilateral filter application are described in further detail in connection with Fig. 6, below. Generally, the bilateral filter will down-convert the U and V channels to generate chrominance subsampling of a frame, to arrive at a YUV420 or YUV422 representation.

In the embodiment shown, the up-conversion module 324 performs a general up-conversion process without the need for application of one or more filters, although use of such filters may be possible. For example, a filter or nearest point copy could be applied to generate up-converted screen content, e.g., a YUV444 frame.

Referring to Fig. 3C, a process flow for a method 340 of down-converting and up-converting chrominance using a discrete cosine transform and a complementary inverse discrete cosine transform is shown, according to an illustrative example. In general, method 340 corresponds to method 300 as described above. However, rather than down-conversion module 302 and up-conversion module 310, method 340 includes a down-conversion module 342 that performs a discrete cosine transform, and an up-conversion module 344 that performs an inverse discrete cosine transform. In particular, in down-conversion module 342, the input for the DCT method module will be a YUV444 frame, and that module will down-sample the U and V channel to generate chrominance subsampling frame to arrive at a new format such as YUV420 or YUV422 formats. The up-conversion module 344 performs an inverse discrete cosine transform, to generate, for example, a YUV444 format frame at the receiving computing system.

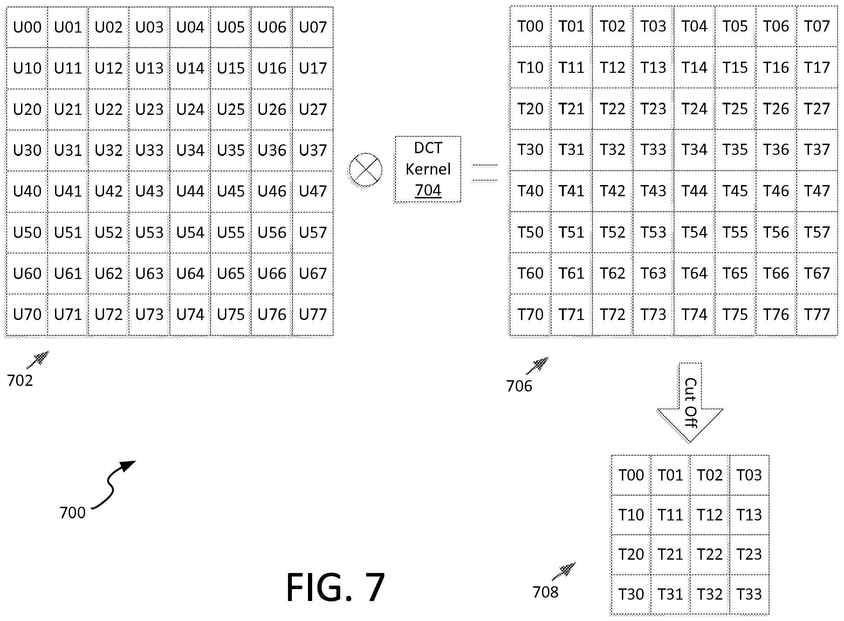

In contrast to the methods 300, 320, method 340 requires complementary operations at opposed ends (e.g., at the computing device 102 and the remote device 120) of a channel over which the down-converted and compressed data is transmitted. This is because, in general use of the DCT-based down conversion, an inverse DCT process is required to reconstruct the data from the DCT process, since the DCT process concentrates high-energy signals in a single quadrant of the DCT matrix. Details of this process are provided below in connection with Figs. 7-8.

Referring now to Figs. 4-5, details regarding an example implementation of the nine tap filter used in connection with the method 300 of Fig. 3A are provided. Fig. 4 generally shows a layout of a nine tap filter 400 for a particular pixel. As illustrated in Fig. 4, a center pixel 402 (the pixel under consideration) is compared to each of eight surrounding pixels 404a-h. The eight surrounding pixels correspond to those generally "touching" the center pixel, i.e., each side and diagonal neighbor. In an example embodiment, the nine tap filter 400 can be described by the below equations, defining downsampling of the UV components of YUV444 formatted screen content (shown as UV down):

$$UV_{down} = \sum_{k=0}^{9} a_k UV[k]$$

$$sub : \sum_{k=0}^{9} a_k = 1$$

In this arrangement, it is noted that the $UV_{down}$ point is based on itself and the eight surrounding pixels 404a-h.

In the example implementation of a nine tap filter 500 shown in Fig. 5, a possible weighting is provided. In particular, in the example implementation, the current pixel, or center point 502, is weighted equally to each of neighboring points 504a-h. Accordingly, the center point 502 is weighted at 8/16 of the overall consideration of the filter, while each neighboring point is assigned a 1/16 weighting. Of course, in alternative embodiments, other weightings of points could be used. Referring to Figs. 3A and 4-5 generally, it is noted that through use of the nine tap filter 400 and associated filtering at a receiving device, overshooting issues that may occur without use of such conversions and/or filters are avoided. Furthermore, this arrangement is computationally simple, and can be used in lower-complexity applications or in cases where one or both of the transmitting or receiving devices have limited computing resources.

Referring to Fig. 6 specifically, details regarding down-conversion using HSL and a bilateral filter are discussed, in the context of an example down-conversion module 600. The down-conversion module 600 could be used, for example in the down-conversion module 322 of Fig. 3B, above. Generally, as illustrated in Fig. 6, the module 600 receives screen content in a first format, such as YUV444. That content is then converted, if YUV444 content, to an RGB scale at an RGB conversion module 602. Alternatively, RGB-formatted data can remain in an original form without such a reformatting.

The RGB-formatted screen content is passed to a hue, saturation, and lightness (HSL) conversion module 604. In example embodiments, saturation ($s$) can be calculated for each of the RGB channels using the following equations:

$$c = \max(R, G, B) - \min(R, G, B)$$

$$s = \frac{c}{1 - |2 * l - 1|}$$

In the above equation, lightness ($l$) can be determined based on the following equation, which represents an average of the RGB values,

$$l = \frac{R + G + B}{3}$$

Hue ($Hp$) can be calculated from the lightness and saturation at a particular point, using the following formula:

$$Hp = l_p * \alpha + s_p * \beta$$

The HSL values, represented in terms of a pixel distance from a nearest neighboring pixel, are then passed to a bilateral filter 606, which receives those values alongside a range distance 608, and provides a downsampled chrominance result 610. In the embodiment shown, the bilateral filter 606 determines the $UV_{down}$ component corresponding to the current down-sampling position using the following responsive filtering equation:

$$UV_{down}(p) = \frac{1}{\aleph} \sum_{p \in R} G_r(|p - q|) G_{hsl}(|H_p - H_q|) I_q$$

In the above bilateral filter definition, the $\aleph$ term is defined as follows:

$$\aleph = \sum_{p \in R} G_r(|p - q|) G_{hsl}(|H_p - H_q|)$$

In that equation, $I_q$ is the pixel value of the $q$ position, $p$ is the current position, and G is the Gaussian kernel, box kernel or other kernel used in the filter.

Referring to Fig. 6 generally, the down-conversion module 600 is particularly applicable in situations where loss of color saturation is undesirable. Because color is represented on the UV plane rather than the HSL plane, the HSL down-conversion results in less loss of chrominance information (with a corresponding trade-off of slightly greater loss in hue information). Furthermore, because additional saturation information is preserved during the down-conversion process, there is less need in module 600 to provide for complementary filtering prior to or during up-conversion, unlike when the nine-tap filter is used (and in which use of a filter during or prior to up-conversion is encouraged).

Referring now to Figs. 7-8, down-conversion and up-conversion of chrominance is disclosed based on use of a discrete cosine transform (as illustrated in Fig. 7) and an inverse discrete cosine transform (as illustrated in Fig. 8). The down-conversion and up-conversion disclosed herein can represent an example of the DCT-based techniques previously mentioned with respect to Fig. 3C.

In the example shown in Fig. 7, a DCT process 700 is shown in which a DCT kernel 702 performs a forward transform on an 8x8 array of U/V values 704, leading to an array of transform coefficients 706. The array of transform coefficients 706, which is also an 8x8 array, is then cut off such that a subset 708 of the transform coefficients, representing only the top-left portion of the array of transform coefficients 706, is maintained. This subset 708 corresponds to down-sampling from YUV444 to YUV420.

In Fig. 8, an inverse DCT (IDCT) process 800 is performed on the subset 708. The IDCT process 800 receives the subset 708 and performs a zero-padded fill to arrive at an 8x8 matrix 802 from the 4x4 matrix originally generated by the DCT process 700. A complementary IDCT kernel 804 recreates a resulting 8x8 array of U/V values 806, to recover the original resolution (e.g., YUV444) of the chrominance information.

It is noted that, referring to Figs. 7-8 generally, the DCT process 700 will typically be performed on screen content at a first computing system prior to application of a codec for compression. The IDCT process 800 will typically be performed at a second computing system that receives the screen content and decompresses it with an analogous codec. The IDCT process 800 is complementary to the DCT process 700, and therefore provides the regeneration of chrominance information as noted above.

In general, and referring to Figs. 1-8 generally, it is noted that the above-referenced methods and systems for down-converting and up-converting chrominance information for screen data allows for retention of sharp edge information for graphical and text data, while reducing noise introduced by way of down-sampling or simply up-sampling using nearest-neighbor data. Additionally, overshooting issues that may occur without use of such conversions and/or filters are avoided.

When comparing the various methods discussed above, it is noted that each of the methods may be used individually or in conjunction based on the desired computing complexity and computing resources available at a transmitting or receiving computing system. For example, the method 300 of Fig. 3A utilizing a nine tap filter will be computationally efficient, while providing some level of improved image quality over simply down-sampling of chrominance information. The method 320 of Fig. 3B may provide a more colorful, vivid representation of screen content than that of Fig. 3A, due to the use of HSL representation and preserving a greater amount of chrominance information. In other words, because saturation information is retained during the down-conversion process, in this methodology it may not be required to provide one or more filters during up-conversion. Whether to apply such filters would be optional, since preservation of image data and avoidance of artifacts is already accomplished through use of the HSL representation.

The method 340 of Fig. 3C, and as illustrated in Figs. 7-8, provides the greatest amount of accuracy in reconstructing a signal in a first format, since that method collects and concentrates the highest-energy U/V values (i.e., the first sixteen highest-order U/V coefficients) into a quadrant of an array that is retained for transmission to a remote system. In systems having native DCT hardware (and can configure such hardware in a complementary manner at transmitting and receiving systems), such an arrangement may prove highly accurate at reproducing color information that remains accurate to the original screen content.

Figs. 9-11 and the associated descriptions provide a discussion of a variety of operating environments in which embodiments of the invention may be practiced. However, the devices and systems illustrated and discussed with respect to Figs. 9-11 are for purposes of example and illustration and are not limiting of a vast number of computing device configurations that may be utilized for practicing embodiments of the invention, described herein.

Fig. 9 is a block diagram illustrating physical components (i.e., hardware) of a computing device 900 with which embodiments of the invention may be practiced. The computing device components described below may be suitable to act as the computing devices described above, such as devices 102, 120 of Fig. 1. In a basic configuration, the computing device 900 may include at least one processing unit 902 and a system memory 904. Depending on the configuration and type of computing device, the system memory 904 may comprise, but is not limited to, volatile storage (e.g., random access memory), non-volatile storage (e.g., read-only memory), flash memory, or any combination of such memories. The system memory 904 may include an operating system 905 and one or more program modules 906 suitable for running software applications 920 such as the remote desktop protocol software 108 and encoder 110 discussed above in connection with Fig. 1, and in particular the down-conversion, up-conversion, and encoding described in connection with Figs. 2-8. The operating system 905, for example, may be suitable for controlling the operation of the computing device 900. Furthermore, embodiments of the invention may be practiced in conjunction with a graphics library, other operating systems, or any other application program and is not limited to any particular application or system. This basic configuration is illustrated in Fig. 9 by those components within a dashed line 908. The computing device 900 may have additional features or functionality. For example, the computing device 900 may also include additional data storage devices (removable and/or non-removable) such as, for example, magnetic disks, optical disks, or tape. Such additional storage is illustrated in Fig. 9 by a removable storage device 909 and a non-removable storage device 910.

As stated above, a number of program modules and data files may be stored in the system memory 904. While executing on the processing unit 902, the program modules 906 (e.g., remote desktop protocol software 108 and encoder 110) may perform processes including, but not limited to, the operations of a universal codec encoder or decoder, as described herein. Other program modules that may be used in accordance with embodiments of the present invention, and in particular to generate screen content, may include electronic mail and contacts applications, word processing applications, spreadsheet applications, database applications, slide presentation applications, drawing or computer-aided application programs, etc.

Furthermore, embodiments of the invention may be practiced in an electrical circuit comprising discrete electronic elements, packaged or integrated electronic chips containing logic gates, a circuit utilizing a microprocessor, or on a single chip containing electronic elements or microprocessors. For example, embodiments of the invention may be practiced via a system-on-a-chip (SOC) where each or many of the components illustrated in Fig. 9 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the remote desktop protocol software 108 and encoder 110 may be operated via application-specific logic integrated with other components of the computing device 1800 on the single integrated circuit (chip). Embodiments of the invention may also be practiced using other technologies capable of performing logical operations such as, for example, AND, OR, and NOT, including but not limited to mechanical, optical, fluidic, and quantum technologies. In addition, embodiments of the invention may be practiced within a general purpose computer or in any other circuits or systems.

The computing device 900 may also have one or more input device(s) 912 such as a keyboard, a mouse, a pen, a sound or voice input device, a touch or swipe input device, etc. The output device(s) 914 such as a display, speakers, a printer, etc. may also be included. The aforementioned devices are examples and others may be used. The computing device 900 may include one or more communication connections 916 allowing communications with other computing devices 918. Examples of suitable communication connections 916 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 904, the removable storage device 909, and the non-removable storage device 910 are all computer storage media examples (i.e., memory storage.) Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 900. Any such computer storage media may be part of the computing device 900. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

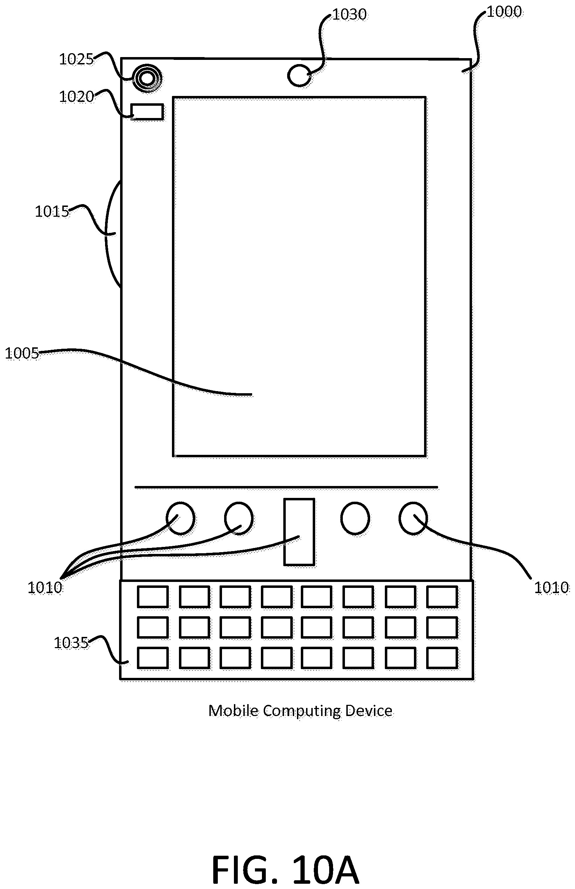

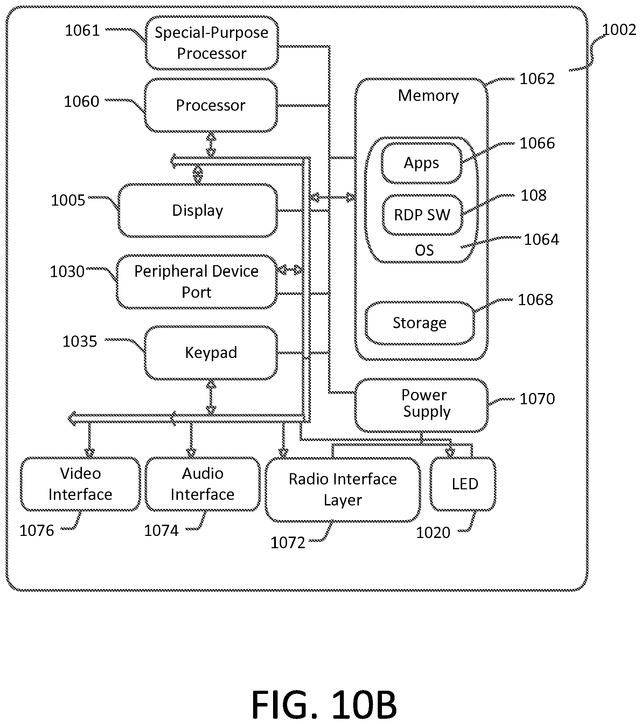

Figs. 10A and 10B illustrate a mobile computing device 1000, for example, a mobile telephone, a smart phone, a tablet personal computer, a laptop computer, and the like, with which embodiments of the invention may be practiced. With reference to Fig. 10A, one embodiment of a mobile computing device 1000 for implementing the embodiments is illustrated. In a basic configuration, the mobile computing device 1000 is a handheld computer having both input elements and output elements. The mobile computing device 1000 typically includes a display 1005 and one or more input buttons 1010 that allow the user to enter information into the mobile computing device 1000. The display 1005 of the mobile computing device 1000 may also function as an input device (e.g., a touch screen display). If included, an optional side input element 1015 allows further user input. The side input element 1015 may be a rotary switch, a button, or any other type of manual input element. In alternative embodiments, mobile computing device 1000 may incorporate more or less input elements. For example, the display 1005 may not be a touch screen in some embodiments. In yet another alternative embodiment, the mobile computing device 1000 is a portable phone system, such as a cellular phone. The mobile computing device 1000 may also include an optional keypad 1035. Optional keypad 1035 may be a physical keypad or a "soft" keypad generated on the touch screen display. In various embodiments, the output elements include the display 1005 for showing a graphical user interface (GUI), a visual indicator 1020 (e.g., a light emitting diode), and/or an audio transducer 1025 (e.g., a speaker). In some embodiments, the mobile computing device 1000 incorporates a vibration transducer for providing the user with tactile feedback. In yet another embodiment, the mobile computing device 1000 incorporates input and/or output ports, such as an audio input (e.g., a microphone jack), an audio output (e.g., a headphone jack), and a video output (e.g., a HDMI port) for sending signals to or receiving signals from an external device.

Fig. 10B is a block diagram illustrating the architecture of one embodiment of a mobile computing device. That is, the mobile computing device 1000 can incorporate a system (i.e., an architecture) 1002 to implement some embodiments. In one embodiment, the system 1902 is implemented as a "smart phone" capable of running one or more applications (e.g., browser, e-mail, calendaring, contact managers, messaging clients, games, and media clients/players). In some embodiments, the system 1002 is integrated as a computing device, such as an integrated personal digital assistant (PDA) and wireless phone.

One or more application programs 1066 may be loaded into the memory 1062 and run on or in association with the operating system 1064. Examples of the application programs include phone dialer programs, e-mail programs, personal information management (PIM) programs, word processing programs, spreadsheet programs, Internet browser programs, messaging programs, and so forth. The system 1002 also includes a non-volatile storage area 1068 within the memory 1062. The non-volatile storage area 1068 may be used to store persistent information that should not be lost if the system 1002 is powered down. The application programs 1066 may use and store information in the non-volatile storage area 1068, such as e-mail or other messages used by an e-mail application, and the like. A synchronization application (not shown) also resides on the system 1002 and is programmed to interact with a corresponding synchronization application resident on a host computer to keep the information stored in the non-volatile storage area 1068 synchronized with corresponding information stored at the host computer. As should be appreciated, other applications may be loaded into the memory 1062 and run on the mobile computing device 1000, including the remote desktop protocol software 108 (and/or optionally encoder 110, or remote device 120) described herein, as well as associated chrominance down-conversion processes as described above. In some analogous systems, an inverse process can be performed via system 1002, in which the system acts as a remote device 120 for decoding a bitstream generated using a video codec and up-converting chrominance of decompressed screen content.

The system 1002 has a power supply 1070, which may be implemented as one or more batteries. The power supply 1070 might further include an external power source, such as an AC adapter or a powered docking cradle that supplements or recharges the batteries.

The system 1002 may also include a radio 1072 that performs the function of transmitting and receiving radio frequency communications. The radio 1072 facilitates wireless connectivity between the system 1002 and the "outside world," via a communications carrier or service provider. Transmissions to and from the radio 1072 are conducted under control of the operating system 1064. In other words, communications received by the radio 1072 may be disseminated to the application programs 1066 via the operating system 1064, and vice versa.

The visual indicator 1020 may be used to provide visual notifications, and/or an audio interface 1074 may be used for producing audible notifications via the audio transducer 1025. In the illustrated embodiment, the visual indicator 1020 is a light emitting diode (LED) and the audio transducer 1025 is a speaker. These devices may be directly coupled to the power supply 1070 so that when activated, they remain on for a duration dictated by the notification mechanism even though the processor 1060 and other components might shut down for conserving battery power. The LED may be programmed to remain on indefinitely until the user takes action to indicate the powered-on status of the device. The audio interface 1074 is used to provide audible signals to and receive audible signals from the user. For example, in addition to being coupled to the audio transducer 1025, the audio interface 1074 may also be coupled to a microphone to receive audible input, such as to facilitate a telephone conversation. In accordance with embodiments of the present invention, the microphone may also serve as an audio sensor to facilitate control of notifications, as will be described below. The system 1002 may further include a video interface 1076 that enables an operation of an on-board camera 1030 to record still images, video stream, and the like.

A mobile computing device 1000 implementing the system 1002 may have additional features or functionality. For example, the mobile computing device 1000 may also include additional data storage devices (removable and/or non-removable) such as, magnetic disks, optical disks, or tape. Such additional storage is illustrated in Fig. 10B by the non-volatile storage area 1068.

Data/information generated or captured by the mobile computing device 1000 and stored via the system 1002 may be stored locally on the mobile computing device 1000, as described above, or the data may be stored on any number of storage media that may be accessed by the device via the radio 1072 or via a wired connection between the mobile computing device 1000 and a separate computing device associated with the mobile computing device 1000, for example, a server computer in a distributed computing network, such as the Internet. As should be appreciated such data/information may be accessed via the mobile computing device 1000 via the radio 1072 or via a distributed computing network. Similarly, such data/information may be readily transferred between computing devices for storage and use according to well-known data/information transfer and storage means, including electronic mail and collaborative data/information sharing systems.

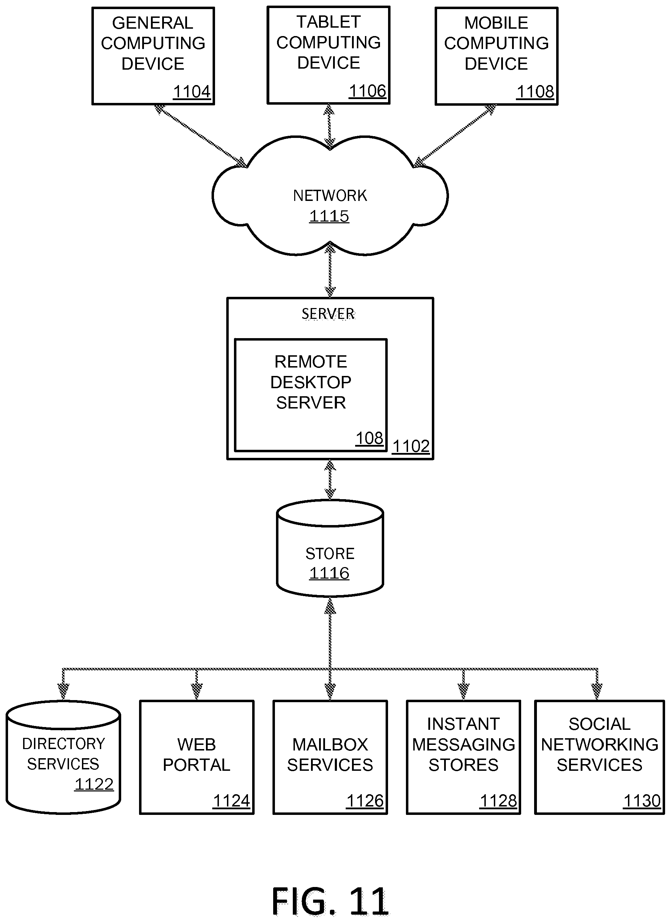

Fig. 11 illustrates one embodiment of the architecture of a system for processing data received at a computing system from a remote source, such as a computing device 1104, tablet 1106, or mobile device 1108, as described above. Content displayed at server device 1102 may be stored in different communication channels or other storage types. For example, various documents may be stored using a directory service 1122, a web portal 1124, a mailbox service 1126, an instant messaging store 1128, or a social networking site 1130. The remote desktop protocol software 108 may generate RDP-compliant, MPEG-compliant (or other standards-compliant) data streams for display at a remote system, for example over the web, e.g., through a network 1115. By way of example, the client computing device may be implemented as the computing device 102 or remote device 120 and embodied in a personal computer 1104, a tablet computing device 1106 and/or a mobile computing device 1108 (e.g., a smart phone). Any of these embodiments of the computing devices 102, 120, 1800, 1800, 1102, 1104, 1106, 1108 may obtain content from the store 1116, in addition to receiving graphical data useable to be either pre-processed at a graphic-originating system, or post-processed at a receiving computing system, as discussed in the chrominance down-conversion and up-conversion techniques described above.

Embodiments of the present invention, for example, are described above with reference to block diagrams and/or operational illustrations of methods, systems, and computer program products according to embodiments of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the invention as claimed in any way. The embodiments, examples, and details provided in this application are considered sufficient to convey possession and enable others to make and use the best mode of claimed invention. The claimed invention should not be construed as being limited to any embodiment, example, or detail provided in this application. Having been provided with the description and illustration of the present application, one skilled in the art may envision variations, modifications, and alternate embodiments that do not depart from the scope of the claimed invention.

**Claims**

1. A method of processing chrominance of screen content, the method comprising:

   down-converting (204) chrominance of screen content at a computing device from a first format to a second format, the second format acceptable as input for a video codec;
   compressing (206) the down-converted screen content in the second format using the video codec to generate compressed down-converted screen content;
   transmitting (208) the compressed down-converted screen content to a second computing device,
   wherein down-converting chrominance of screen content comprises converting the screen content to a hue, saturation, and lightness, HSL, format, and
   wherein down-converting chrominance of the screen content comprises applying a bilateral filter (302) to the converted screen content in the HSL format to generate the down-converted screen content.

2. The method of claim 1, further comprising, prior to performing the chrominance down conversion, receiving (202) screen content at the computing device.

3. The method of claim 2, wherein receiving the screen content at the computing device includes generating the screen content at the computing device.

4. The method of claim 1, further comprising, at the second computing device, decompressing (210) the compressed down-converted screen content, thereby reconstituting down-converted screen content in the second format.

5. The method of claim 4, further comprising, at the second computing device, up-converting (212) chrominance of the down-converted screen content, thereby generating second screen content in the first format.

6. The method of claim 1, wherein down-converting chrominance of screen content further comprises applying a nine-tap filter (400; 500) to the screen content.

7. The method of claim 1, wherein the first format comprises a YUV444 format, and wherein the second format comprises a YUV420 format.

8. A screen content conversion system comprising:

   a down-conversion component (110; 302) operable on a computing device (102) to receive (202) screen content and down-convert chrominance of the screen content from a first format to a second format, the second format being acceptable as input for a video codec, wherein the down-conversion component applies at least a bilateral filter, to the screen content to generate down-converted screen content;
   a compression component (322) operable on the computing device to receive the down-converted screen content and generate (206) compressed down-converted screen content by applying the video codec; and

a transmission component (114; 306) operable to transmit (208) the compressed down-converted screen content to a remote computing device (120),

wherein the down-conversion component is configured to convert the screen content to a hue, saturation, and lightness, HSL, format prior to applying the bilateral filter.

9. The screen content conversion application of claim 8, wherein the down-conversion component applies a nine-tap filter (400; 500) in addition to the bilateral filter.

10. The screen content conversion system of claim 8, wherein the screen content conversion system further includes the remote computing device (120), and wherein the screen content conversion system further includes:

a decompression component (308) operable on the remote computing device to receive the compressed down-converted screen content and reconstitute (210) the down-converted screen content; and
an up-conversion component (212) operable on the remote computing device to receive the down-converted screen content.

11. The screen content conversion system of claim 10, wherein the up-conversion component includes a bilinear filter (606).

12. The screen content conversion system of claim 9, wherein the nine-tap filter includes a set of weighted taps including a center tap (402; 502) and a plurality of surrounding taps (404; 504), the center tap weighted equally to the surrounding taps.

13. A computer-readable medium comprising computer-executable instructions which, when executed, cause a computing system to perform a method of processing chrominance of screen content, the method comprising:

down-converting (204) chrominance of screen content at a computing device from a first format to a second format, the second format acceptable as input for a video codec, wherein the down-conversion includes applying at least a bilateral filter the screen content to generate down-converted screen content,
wherein down-converting chrominance of screen content comprises converting the screen content to a hue, saturation, and lightness, HSL, format, and
wherein down-converting chrominance of the screen content further comprises applying the bilateral filter to the converted screen content in the HSL format to generate the down-converted screen content;

compressing (206) the down-converted screen content in the second format using the video codec to generate compressed down-converted screen content;
transmitting (208) the compressed down-converted screen content to a second computing device.

14. The computer-readable medium of claim 13, wherein the method further includes:

decompressing (210) the compressed down-converted screen content, thereby reconstituting down-converted screen content in the second format; and
up-converting (212) chrominance of the down-converted screen content, thereby generating second screen content in the first format.

**Patentansprüche**

1. Verfahren zum Verarbeiten der Chrominanz eines Bildschirminhalts, wobei das Verfahren umfasst:

Abwärtswandeln (204) der Chrominanz eines Bildschirminhalts an einem Rechengerät von einem ersten Format zu einem zweiten Format, wobei das zweite Format als eine Eingabe für einen Videocodec annehmbar ist,
Komprimieren (206) des abwärtsgewandelten Bildschirminhalts in dem zweiten Format unter Verwendung des Videocodecs, um einen komprimierten, abwärtsgewandelten Bildschirminhalt zu erzeugen,
Senden (208) des komprimierten, abwärtsgewandelten Bildschirminhalts zu einem zweiten Rechengerät,
wobei das Abwärtswandeln der Chrominanz des Bildschirminhalts das Wandeln des Bildschirminhalts zu einem HSL (Hue, Saturation and Lightness, d.h. Farbton, Sättigung und Helligkeit)-Format umfasst, und

wobei das Abwärtswandeln der Chrominanz des Bildschirminhalts das Anwenden eines bilateralen Filters (302) auf den gewandelten Bildschirminhalt in dem HSL-Format für das Erzeugen des abwärtsgewandelten Bildschirminhalts umfasst.

2. Verfahren nach Anspruch 1, das weiterhin, vor dem Durchführen der Chrominanz-Abwärtswandlung das Empfangen (202) eines Bildschirminhalts an dem Rechengerät umfasst.

3. Verfahren nach Anspruch 2, wobei das Empfangen des Bildschirminhalts an dem Rechengerät das Erzeugen des Bildschirminhalts an dem Rechengerät umfasst.

4. Verfahren nach Anspruch 1, das weiterhin, an dem zweiten Rechengerät, das Dekomprimieren (210) des komprimierten, abwärtsgewandelten Bildschirminhalts für das Wiederherstellen des abwärtsgewandelten Bildschirminhalts in dem zweiten Format umfasst.

5. Verfahren nach Anspruch 4, das weiterhin, an dem zweiten Rechengerät, das Aufwärtswandeln (212) der Chrominanz des abwärtsgewandelten Bildschirminhalts für das Erzeugen des zweiten Bildschirminhalts in dem ersten Format umfasst.

6. Verfahren nach Anspruch 1, wobei das Abwärtswandeln der Chrominanz des Bildschirminhalts weiterhin das Anwenden eines Nine-Tap-Filters (400; 500) auf den Bildschirminhalt umfasst.

7. Verfahren nach Anspruch 1, wobei das erste Format ein YUV444-Format ist und das zweite Format ein YUV420-Format ist.

8. Bildschirminhalt-Wandlungssystem, umfassend:

eine Abwärtswandlungskomponente (110; 302), die auf einem Rechengerät (102) betrieben werden kann zum Empfangen (202) eines Bildschirminhalts und zum Abwärtswandeln der Chrominanz des Bildschirminhalts von einem ersten Format zu einem zweiten Format, wobei das zweite Format als eine Eingabe für einen Videocodec annehmbar ist, wobei die abwärtsgewandelte Komponente wenigstens ein bilaterales Filter auf den Bildschirminhalt anwendet, um einen abwärtsgewandelten Bildschirminhalt zu erzeugen,
eine Kompressionskomponente (322), die auf dem Rechengerät betrieben werden kann zum Empfangen des abwärtsgewandelten Bildschirminhalts und zum Erzeugen (206) eines komprimierten, abwärtsgewandelten Bildschirminhalts durch das Anwenden des Videocodecs, und
eine Sendekomponente (114; 306), die betriebsfähig ist zum Senden (208) des komprimierten, abwärtsgewandelten Bildschirminhalts zu einem fernen Rechengerät (120),

wobei die Abwärtswandlungskomponente konfiguriert ist zum Wandeln des Bildschirminhalts zu einem HSL (Hue, Saturation and Lightnes, d.h. Farbton, Sättigung und Helligkeit)-Format vor dem Anwenden des bilateralen Filters.

9. Bildschirminhalt-Wandlungssystem nach Anspruch 8, wobei die Abwärtswandlungskomponente ein Nine-Tap-Filter (400; 500) zusätzlich zu dem bilateralen Filter anwendet.

10. Bildschirminhalt-Wandlungssystem nach Anspruch 8, wobei das Bildschirminhalt-Wandlungssystem weiterhin das ferne Rechengerät (120) umfasst und wobei das Bildschirminhalt-Wandlungssystem weiterhin umfasst:

eine Dekomprimierungskomponente (308), die auf dem fernen Rechengerät betrieben werden kann zum Empfangen des komprimierten, abwärtsgewandelten Bildschirminhalts und zum Wiederherstellen (210) des abwärtsgewandelten Bildschirminhalts, und
eine Aufwärtswandlungskomponente (212), die auf dem fernen Rechengerät betrieben werden kann zum Empfangen des abwärtsgewandelten Bildschirminhalts.

11. Bildschirminhalt-Wandlungssystem nach Anspruch 10, wobei die Aufwärtswandlungskomponente ein bilineares Filter (606) enthält.

12. Bildschirminhalt-Wandlungssystem nach Anspruch 9, wobei das Nine-Tap-Filter einen Satz von gewichteten Taps enthält, die ein mittleres Tap (402; 502) und eine Vielzahl von umgebenden Taps (404; 504) umfassen, wobei das mittlere Tap gleich wie die umgebenden Taps gewichtet ist.

**13.** Computerlesbares Medium mit computerausführbaren Befehlen, die bei einer Ausführung veranlassen, dass ein Rechensystem ein Verfahren zum Verarbeiten der Chrominanz eines Bildschirminhalts durchführt, wobei das Verfahren umfasst:

Abwärtswandeln (204) der Chrominanz eines Bildschirminhalts an einem Rechengerät von einem ersten Format zu einem zweiten Format, wobei das zweite Format als eine Eingabe für einen Videocodec annehmbar ist, wobei das Abwärtswandeln das Anwenden wenigstens eines bilateralen Filters auf den Bildschirminhalt für das Erzeugen des abwärtsgewandelten Bildschirminhalts umfasst, wobei das Abwärtswandeln der Chrominanz des Bildschirminhalts das Wandeln des Bildschirminhalts zu einem HSL (Hue, Saturation and Lightness, d.h. Farbton, Sättigung und Helligkeit)-Format umfasst, und wobei das Abwärtswandeln der Chrominanz des Bildschirminhalts weiterhin das Anwenden eines bilateralen Filters auf den gewandelten Bildschirminhalt in dem HSL-Format für das Erzeugen des abwärtsgewandelten Bildschirminhalts umfasst,

Komprimieren (206) des abwärtsgewandelten Bildschirminhalts in dem zweiten Format unter Verwendung des Videocodecs, um einen komprimierten, abwärtsgewandelten Bildschirminhalt zu erzeugen, Senden (208) des komprimierten, abwärtsgewandelten Bildschirminhalts zu einem zweiten Rechengerät.

**14.** Computerlesbares Medium nach Anspruch 13, wobei das Verfahren weiterhin umfasst:

Dekomprimieren (210) des komprimierten, abwärtsgewandelten Bildschirminhalts, um den abwärtsgewandelten Bildschirminhalt in dem zweiten Format wiederherzustellen, und Aufwärtswandeln (212) der Chrominanz des abwärtsgewandelten Bildschirminhalts, um einen zweiten Bildschirminhalt in dem ersten Format zu erzeugen.

## Revendications

**1.** Procédé de traitement de la chrominance d'un contenu d'écran, le procédé comprenant les opérations suivantes:

convertir vers le bas (204) la chrominance du contenu d'écran dans un dispositif informatique, pour passer d'un premier format à un second format, le second format étant acceptable comme entrée pour un codec vidéo; comprimer (206) le contenu de l'écran converti vers le bas dans le second format en utilisant le codec vidéo pour générer un contenu d'écran converti vers le bas et comprimé; transmettre (208) le contenu d'écran converti vers le bas et comprimé à un second dispositif informatique, dans lequel la conversion vers le bas de la chrominance du contenu d'écran consiste à convertir le contenu d'écran en format HSL, teinte, saturation et luminosité, et dans lequel la conversion vers le bas de la chrominance du contenu d'écran consiste à appliquer un filtre bilatéral (302) au contenu de l'écran converti au format HSL afin de générer le contenu d'écran converti vers le bas.

**2.** Procédé selon la revendication 1, consistant en outre, avant d'effectuer la conversion vers le bas de chrominance, à recevoir (202) le contenu d'écran dans le dispositif informatique.

**3.** Procédé selon la revendication 2, dans lequel la réception du contenu d'écran dans le dispositif informatique consiste à générer le contenu d'écran dans le dispositif informatique.

**4.** Procédé selon la revendication 1, consistant en outre, dans le second dispositif informatique, à décomprimer (210) le contenu d'écran converti vers le bas et comprimé, pour ainsi reconstituer le contenu d'écran converti vers le bas dans le second format.

**5.** Procédé selon la revendication 4, consistant en outre, dans le second dispositif informatique, à convertir vers le faut (212) la chrominance du contenu d'écran converti vers le bas, pour ainsi générer le second contenu d'écran dans le premier format.

**6.** Procédé selon la revendication 1, dans lequel la conversion vers le bas de la chrominance du contenu d'écran consiste en outre à appliquer un filtre à neuf prises (400; 500) au contenu d'écran.

**7.** Procédé selon la revendication 1, dans lequel le premier format comprend un format YUV444 , et dans lequel le second format comprend un format YUV420.

8. Système de conversion de contenu d'écran comprenant:

un composant de conversion vers le bas (110; 302) pouvant fonctionner sur un dispositif informatique (102) pour recevoir (202) le contenu d'écran et pour la conversion vers le bas de la chrominance du contenu d'écran et ce, d'un premier format à un second format, le second format étant accepté comme entrée pour un codec vidéo, dans lequel le composant de conversion vers le bas applique au moins un filtre bilatéral au contenu d'écran pour générer un contenu d'écran converti vers le bas;
un composant de compression (322) utilisable sur le dispositif informatique pour recevoir le contenu d'écran converti vers le bas et générer (206) un contenu d'écran converti vers le bas et comprimé en appliquant le codec vidéo; et
un composant de transmission (114; 306) utilisable pour transmettre (208) le contenu d'écran converti vers le bas et comprimé à un dispositif informatique distant (120),

dans lequel le composant de conversion vers le bas est configuré pour convertir le contenu d'écran en un format HSL (teinte, saturation et luminosité) avant l'application du filtre bilatéral.

9. Application de conversion de contenu d'écran selon la revendication 8, dans laquelle le composant de conversion vers le bas applique un filtre à neuf prises (400; 500) en plus du filtre bilatéral.

10. Système de conversion de contenu d'écran selon la revendication 8, dans lequel le système de conversion de contenu d'écran comprend en outre le dispositif informatique distant (120) et dans lequel le système de conversion de contenu d'écran comprend en outre:

un composant de décompression (308) utilisable sur le dispositif informatique distant pour recevoir le contenu d'écran converti vers le bas et comprimé, et reconstituer (210) le contenu d'écran converti vers le bas; et
un composant de conversion vers le haut (212) utilisable sur le dispositif informatique distant pour recevoir le contenu d'écran converti vers le bas.

11. Système de conversion de contenu d'écran selon la revendication 10, dans lequel le composant de conversion vers le haut comprend un filtre bilinéaire (606).

12. Système de conversion de contenu d'écran selon la revendication 9, dans lequel le filtre à neuf prises comprend une ensemble de prises pondérées comprenant une prise centrale (402; 502) et une pluralité de prises environnantes (404; 504), la prise centrale pondérée également sur les prises environnantes.

13. Support lisible par ordinateur comprenant des instructions exécutables par ordinateur qui, lorsqu'elles sont exécutées, conduisent un système informatique à exécuter un procédé de traitement de la chrominance de contenu d'écran, le procédé comprenant les opérations suivantes:

convertir vers le bas (204) la chrominance du contenu d'écran dans un dispositif informatique, pour passer d'un premier format à un second format, le second format étant acceptable comme entrée pour un codec vidéo, dans lequel le composant de conversion vers le bas applique au moins un filtre bilatéral au contenu d'écran pour générer un contenu d'écran converti vers le bas, dans lequel la conversion vers le bas de la chrominance du contenu d'écran consiste à convertir le contenu d'écran en format HSL, teinte, saturation et luminosité, et dans lequel la conversion vers le bas de la chrominance du contenu d'écran consiste à appliquer un filtre bilatéral au contenu de l'écran converti au format HSL afin de générer le contenu d'écran converti vers le bas;

comprimer (206) le contenu de l'écran converti vers le bas dans le second format en utilisant le codec vidéo pour générer un contenu d'écran converti vers le bas et comprimé;
transmettre (208) le contenu d'écran converti vers le bas et comprimé à un second dispositif informatique.

14. Support de stockage selon la revendication 13, dans lequel le procédé comprend en outre les étapes suivantes:

décomprimer (210) le contenu d'écran vers le bas et comprimé, reconstituant ainsi le contenu d'écran converti vers le bas dans le second format; et

convertir vers le faut (212) la chrominance du contenu d'écran converti vers le bas, pour ainsi générer un second contenu d'écran dans le premier format.

Display 112

Main Programmable
Circuit 104

Memory 106

Remote Desktop
Server 108

Video Encoder 110

Communication
Interface 114

Computing Device 102

Display 128

Main Programmable
Circuit 124

Special Purpose
Programmable
Circuit 125

Memory 126

Remote Desktop
Client 130

Display Buffer 132

Communication
Interface 134

Remote Device 120

116

100

# FIG. 1

FIG. 2

Input → **Chroma down-conversion with 9 taps filter** /302 → **Video Compression /Processing** /304 → **Channel** /306 → **Video Decompress/ Processing** /308 → **Frame Up-Conversion with bilinear filter** /310 → **Display/ Storage** /312

300

# FIG. 3A

Input → **Chroma down-conversion with HSL and Bilateral Filter** /302 → **Video Compression /Processing** /322 → **Channel** /306 → **Video Decompress/ Processing** /308 → **Frame Up-Conversion** /324 → **Display/ Storage** /312

320

# FIG. 3B

Input → **Chroma down-conversion with DCT** /302 → **Video Compression /Processing** /342 → **Channel** /306 → **Video Decompress/ Processing** /308 → **Frame Up-Conversion with IDCT** /344 → **Display/ Storage** /312

340

# FIG. 3C

FIG. 4

FIG. 5

Input_YUV444 → To RGB (602) → To HSL (604) → Bilateral Filter (606) → Chroma Down-sample result (610)

Range Distance (608)

600

**FIG. 6**

DCT Kernel 704

Cut Off

FIG. 7

FIG. 8

EP 3 063 937 B1

COMPUTING DEVICE

SYSTEM MEMORY

OPERATING SYSTEM

905

PROGRAM MODULES

APPLICATIONS

REMOTE DESKTOP PROTOCOL SOFTWARE

108

ENCODER/ DECODER

110

920

906

904

PROCESSING UNIT

902

SPECIAL-PURPOSE PROCESSING UNIT

903

908

REMOVABLE STORAGE

909

NON-REMOVABLE STORAGE

910

INPUT DEVICE(S)

912

OUTPUT DEVICE(S)

914

COMMUNICATION CONNECTIONS

916

900

OTHER COMPUTING DEVICES

950

FIG. 9

Mobile Computing Device

# FIG. 10A

FIG. 10B

FIG. 11